# EUROPÄISCHE PATENTSCHRIFT

(11) **EP 4 043 292 B1**
(45) Veröffentlichungstag und Bekanntmachung des Hinweises auf die Patenterteilung: **09.04.2025**
(21) Anmeldenummer: 22154922.3
(22) Anmeldetag: 03.02.2022
(51) Int. Cl.: B60R 21/02

(54) **TRENNWAND FÜR FAHRZEUG**
VEHICLE PARTITION
CLOISON POUR VÉHICULES

(30) Priorität: 12.02.2021 DE 202021100719 U
(43) Veröffentlichungstag der Anmeldung: 17.08.2022
(73) Patentinhaber: Weber Fibertech GmbH, 88677 Markdorf (DE)
(72) Erfinder: STÖTZNER, Norbert, 88677 Markdorf (DE)
(74) Vertreter: RDL Patentanwälte PartG mbB

(56) Entgegenhaltungen:
- WO-A1-2013/140053
- CN-U- 203 753 049
- US-A1- 2017 253 190

## Beschreibung

Die Erfindung betrifft eine Trennwand für ein Fahrzeug bzw. Kraftfahrzeug, insbesondere ein Transportfahrzeug, und ein Fahrzeug mit einer solchen Trennwand.

Kraftfahrzeuge, die zum Transport von Waren vorgesehen sind, weisen einen Laderaum auf, der mit einer Trennwand vom Fahrerraum abgetrennt wird. Diese Trennwände sind dazu eingerichtet, den Fahrzeuginnenraum so aufteilen, dass ein Raum für Personen, insbesondere für den Fahrer, und ein Raum für zu transportierende Waren bereitgestellt wird.

Bei Trennwänden wird angestrebt, dass diese eine gute Raumaufteilung bei gleichzeitiger hoher Variabilität ermöglichen. Insbesondere soll die Trennwand eine sichere Abtrennung zwischen Laderaum und Fahrerraum bereitstellen, ohne zu aufwändig und zu schwer aufgebaut zu sein.

Herkömmliche Trennwände für Pkw und Transporter werden üblicherweise aus Stahl gefertigt und weisen dadurch ein höheres Gewicht auf und sind in akustischer Hinsicht nicht optimal. Die Trennwand dient dabei dem Schutz des Fahrers vor Gegenständen aus dem Laderaum und erzeugt eine Trennung vom Laderaum. Zur besseren Sicht nach hinten enthalten diese optional eine Scheibe. Solche Trennwände sind typischerweise einstückig ausgebildet.

Die Druckschrift DE 83 26 707 U beschreibt eine einstückige Trennwand mit einer Sitzkonstruktion, wobei der untere Teil als Sitz und der obere Teil als Rücken in der Form eines verhältnismäßig flachen Wandabschnitts ausgebildet ist.

Weiterhin gibt es auch Kunststofftrennwände mit Stahlstreben zur Verstärkung. Diese weisen ein besseres akustisches Verhalten auf. Diese Trennwände sind jedoch durch die verwendeten Strahlstreben sehr schwer und zudem meist ohne Scheibe ausgeführt. Wenn eine Scheibe vorhanden sein soll, weist diese aufgrund ihres elastischen Materials ein Gitter zum Schutz der Scheibe auf.

Die Druckschrift EP 1 650 086 A1 beschreibt ein Kraftfahrzeug mit einem Laderaum und einem Fahrerraum, die durch eine Trennwand voneinander getrennt sind. Die Trennwand weist zwei über ein Scharnier schwenkbar miteinander verbundene Flächen auf. Diese Trennwand ist somit vertikal aufgeteilt, d. h. die Trennwand umfasst zwei vertikal getrennte Abschnitte bzw. Flächen. Die beiden Flächen sind somit durch eine vertikal verlaufende Linie voneinander getrennt und bilden eine rechte und linke Hälfte der Trennwand.

Eine Trennwand gemäß dem Oberbegriff des Anspruchs 1 ist in der Druckschrift CN 203 753 049 U offenbart. Die beschreibt eine Nutzfahrzeug-Klappenstruktur mit einem oberen Körper und einem unteren Körper, die miteinander verbunden sind. Zwischen diesen beiden Körpern ist ein überlappende Bereich ausgebildet, der einen abgeschlossenen Abschnitt bildet, der zur Verstärkung dient.

Aus der Druckschrift WO 2013/140053 A1 ist ein Kraftfahrzeug mit einem Kasten bekannt, wobei der Kasten einen hinteren Gepäckraum definiert. Weiterhin ist eine Schutzvorrichtung gezeigt, die zum Schutz vor dem Eindringen von im Kofferraum befindlichen Gegenständen in den Fahrgastraum dient. Diese Schutzvorrichtung umfasst einen oberen und einen unteren Querträger.

Vor diesem Hintergrund werden eine Trennwand mit den Merkmalen des Anspruchs 1 und ein Fahrzeug gemäß Anspruch 9 vorgestellt. Ausführungsformen ergeben sich aus den abhängigen Ansprüchen und aus der Beschreibung.

Die vorgestellte Trennwand ist für den Einsatz im Innenraum eines Fahrzeugs bzw. Kraftfahrzeugs, insbesondere eines Last- bzw. Transportfahrzeugs, eingerichtet. Die Trennwand umfasst eine obere Trennwandhälfte bzw. einen oberen Trennwandteil und eine untere Trennwandhälfte bzw. einen unteren Trennwandteil. Die beiden Trennwandhälften sind derart zueinander angeordnet bzw. zusammengefügt bzw. zusammengebaut, dass diese sich in vertikaler Richtung in einem Überlappungsbereich überlappen, so dass in diesem Überlappungsbereich ein Kanal ausgebildet ist.

Es sind weiterhin Luftspalte und/oder Luftkanäle vorgesehen, um eine Entlüftungsfunktion zu erfüllen.

Die Ausdrücke oben und unten beziehen sich darauf, dass die obere Trennwandhälfte im zusammengebauten Zustand im Fahrzeug bis auf den Überlappungsbereich über der unteren Trennwandhälfte angeordnet ist. Die beiden Trennwandhälften sind dabei derart miteinander verbunden, dass diese eine stabile Trennwand bilden, die eine sichere Abtrennung zwischen zwei Räumen, typischerweise einem Fahrgastraum und einem Lade- bzw. Transportraum, ermöglicht. Die Trennwand ist somit horizontal geteilt, d. h. eine Linie, die entlang dem Übergangsbereich zwischen oberer Trennwandhälfte und unterer Trennwandhälfte verläuft, verläuft im wesentlichen in horizontaler Richtung.

Der Überlappungsbereich ist ein Bereich, in dem die beiden Trennwandhälften sich in vertikaler Richtung überlappen. Eine solche Überlappung wird durch besondere Formgebung zumindest einer der beiden Trennwandhälften und/oder durch ein in Längsrichtung des Fahrzeugs versetztes Anordnen der beiden Trennwandhälften zueinander erreicht. Dieser Überlappungsbereich ist derart ausgebildet, dass sich ein Kanal mit bspw. rechteckförmigem Querschnitt bildet. Dieser Kanal stellt eine Verstärkung der Trennwand dar und ermöglicht, eine ausreichend stabile Trennwand bereitzustellen, ohne dass besonders stabile und schwere Materialien, wie bspw. Metalle, verwendet werden müssen.

In einer Ausführungsform sind die beiden Trennwandhälften aus einem Kunststoff gefertigt sind. Es kommen hierfür bspw. faserverstärkte Kunststoffe in Betracht. Somit kann die Trennwand aus einem leichten Material gefertigt werden, was wiederum die maximale Zuladung erhöht.

Im Bereich des Kanals kann eine Verstärkung, bspw. ein Endlosfaserband, vorgesehen sein. Hierbei kann auch ein LFT-Material (LFT: Langfaserverstärkte Thermoplaste) zum Einsatz kommen.

Die beiden Trennwandhälften sollten sicher miteinander verbunden werden. Hierfür kommt bspw. eine Verschraubung in Betracht.

In der Trennwand kann eine Ausnehmung vorgesehen sein. Diese ist typischerweise in der oberen Trennwandhälfte eingebracht und ermöglicht, dass eine Person im Fahrgastraum nach hinten in den Transportraum sehen kann, um ggf. zu kontrollieren, ob die transportierte Ware verrutscht ist.

In die Ausnehmung kann bspw. ein Gitter oder eine Scheibe aus einem transparenten Material eingesetzt sein.

Es wird außerdem ein Fahrzeug, insbesondere ein Kraftfahrzeug, mit einem Fahrzeuginnenraum vorgestellt, bei dem in dem Fahrzeuginnenraum eine Trennwand der hierin beschriebenen Art vorgesehen ist. Diese Trennwand ist dazu eingerichtet, den Fahrzeuginnenraum in zwei Räume aufzuteilen bzw. zu unterteilen.

Das beschriebene Fahrzeug weist in seinem Innenraum eine Trennwand der hierin beschriebenen Art auf. Auf diese Weise wird der Innenraum des Fahrzeugs in zwei Räume unterteilt, die vollständig voneinander abgetrennt sein können. Die beiden Räume sind typischerweise ein Fahrerraum und ein Laderaum.

Mit der vorgestellten Trennwand wird erreicht, dass diese zum einen leichter wird und zum anderen ein besseres akustisches Verhalten zeigt. Zudem ist die Fertigung durch Kunststoff wirtschaftlicher und nachhaltiger in der Produktion. Die Anbringung einer Verrippung kann leichter umgesetzt werden und es bieten sich größere Gestaltungsfreiräume.

Hierdurch wird im Gegensatz zu anderen Trennwänden erreicht, dass eine Stahlstrebe zur Abstützung entfallen kann. Die Trennwand ist hierbei horizontal geteilt, d. h. die Trennung zwischen den beiden Teilen bzw. Hälften verläuft im wesentlichen horizontal, was die Montage im Fahrzeug erleichtert. Es gibt somit einen unteren und einen oberen Teil. Der obere und der untere Teil überlappen sich und formen so einen Kanal. Dieser erzeugt ein größeres Trägheitsmoment und sorgt für eine geringe Verformung und mehr Steifigkeit der Trennwand. Zur weiteren Verstärkung dieses Kanals kann ein Endlosfaserband eingebracht werden.

Beide Teile können durch eine kunststoffgerechte Verschraubung zusammengefügt werden. Hierbei kann bzw. können eine Direktverschraubung oder Kunststoffeinsätze für Metallschrauben eingebracht werden.

Ist eine Scheibe in der Trennwand vorgesehen, so kann diese ohne Gitter ausgeführt werden. Dies kann durch Verwendung eines Langfaser- bzw. LFT-Materials erreicht werden, das mehr Steifigkeit aufweist. So kann sich die Scheibe nicht so stark verformen.

Um einen Druckausgleich im Fahrzeug zu schaffen, erfüllt die Trennwand zudem eine Entlüftungsfunktion, die durch die Luftspalte bzw. Luftkanäle bereitgestellt wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnung
Figur 1 zeigt eine Ausführung einer Trennwand in einer Draufsicht und einer Seitenansicht.
Figur 2 zeigt in einer Seitenansicht eine Ausführungsform einer Trennwand und einen Ausschnitt aus dieser Darstellung.
Figur 3 zeigt ein Detail zu einer Ausführungsform der Trennwand.
Figur 4 zeigt ein weiteres Detail zu einer Ausführungsform der Trennwand.
Figur 5 zeigt einen Abschnitt einer Ausführungsform der Trennwand.

### Ausführungsformen der Erfindung

Die Erfindung ist anhand von Ausführungsformen in der Zeichnung schematisch dargestellt und wird nachfolgend unter Bezugnahme auf die Zeichnung ausführlich beschrieben.

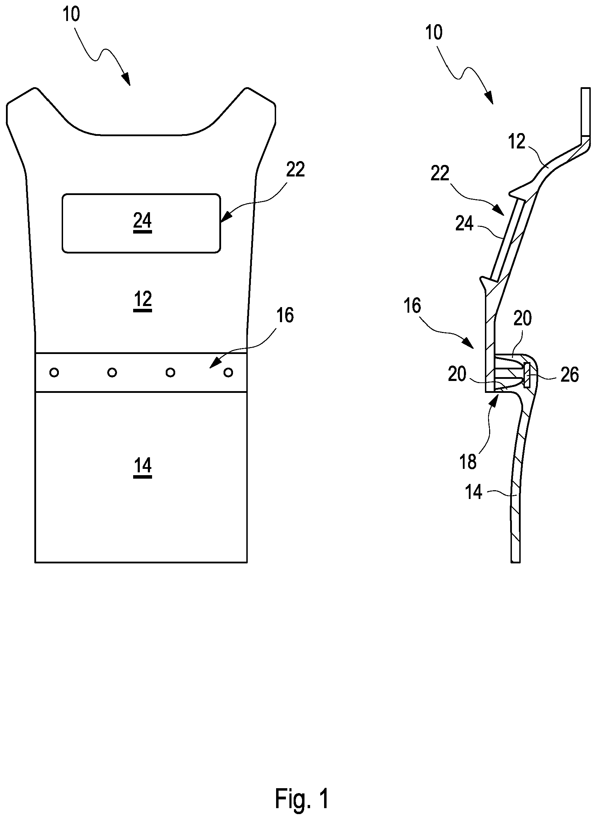

Figur 1 zeigt eine Ausführungsform einer Trennwand, die insgesamt mit der Bezugsziffer 10 bezeichnet ist. Dabei ist diese Trennwand 10 auf der linken Seite in einer Draufsicht und auf der rechten Seite in einer Seitenansicht wiedergegeben.

Die Trennwand 10 umfasst eine obere Trennwandhälfte 12 und eine untere Trennwandhälften 14, die derart zueinander angeordnet sind, dass ein Überlappungsbereich 16 gebildet ist. Dieser Überlappungsbereich 16 ist, wie auf der rechten Seite zu sehen ist, als Kanal 18 ausgebildet. Die Seitenansicht verdeutlicht zudem, dass die beiden Trennwandhälften 12 und 14 ein wenig versetzt zueinander angeordnet sind. Weiterhin weist die untere Trennwandhälfte 14 in ihrem oberen Bereich eine besondere Ausformung mit zwei in horizontaler Richtung durchgängigen Stegen 20 auf, die zusammen mit dem unteren Bereich der oberen Trennwandhälfte 12 den Kanal 18 ausbilden bzw. definieren.

Die obere Trennwandhälfte 12 hat zudem eine Ausnehmung 22, in die eine Scheibe 24 aus einem transparenten Material eingesetzt ist. Hierfür kommt bspw. Glas oder Kunststoff in Betracht.

Weiterhin ist in dem Kanal 18 ein Endlosfaserband 26 an der unteren Trennwandhälfte 14 zwischen den beiden Stegen 20 angebracht, dass eine zusätzliche Verstärkung des Kanals 18 und damit der gesamten Trennwand 10 bereitstellt.

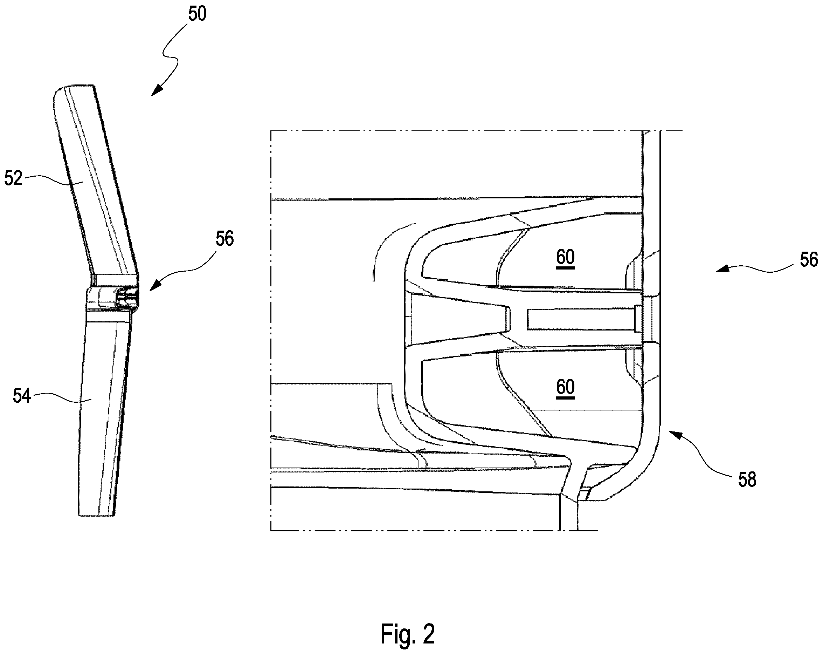

Figur 2 zeigt auf der linken Seite in einer Seitenansicht eine Ausführungsform einer Trennwand, die insgesamt mit der Bezugsziffer 50 bezeichnet ist. Diese Trennwand 50 umfasst eine obere Trennwandhälfte 52 und eine untere Trennwandhälfte 54. Im Übergangsbereich zwischen den beiden Trennwandhälften 52, 54 ist ein Überlappungsbereich 56 ausgebildet, der auf der rechten Seite der Figur 2 vergrößert dargestellt ist.

Der Überlappungsbereich 56 ist als Kanal 58 ausgebildet, der in diesem Fall zwei in horizontaler Richtung verlaufende Kammern 60 aufweist. Die besondere Formgebung des Überlappungsbereichs 56 bietet eine Verstärkung der Trennwand 50 und gewährleistet eine hohe Stabilität.

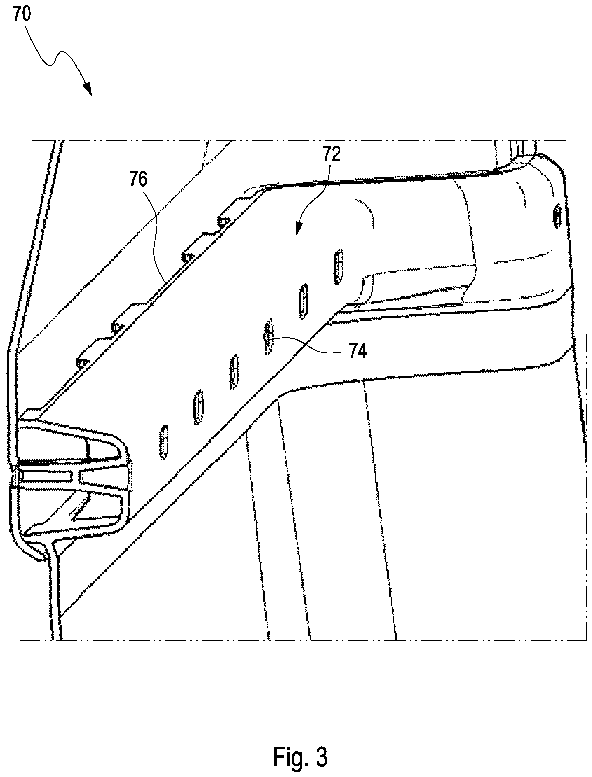

Figur 3 zeigt einen Überlappungsbereich einer Trennwand, der mit Bezugsziffer 70 bezeichnet ist. Dieser ist als Kanal 72 ausgebildet. Zu erkennen ist, dass der Kanal 72 nicht vollständig abgeschlossen ist, sondern dass dieser so ausgebildet ist, dass Luftspalte 74 und Luftkanäle 76 vorgesehen sind. Durch diese Luftspalte 74 und Luftkanäle 76 ist die Stabilität des Kanals 72 nicht beeinträchtigt. Es kann durch diese jedoch eine Entlüftungsfunktion erfüllt werden.

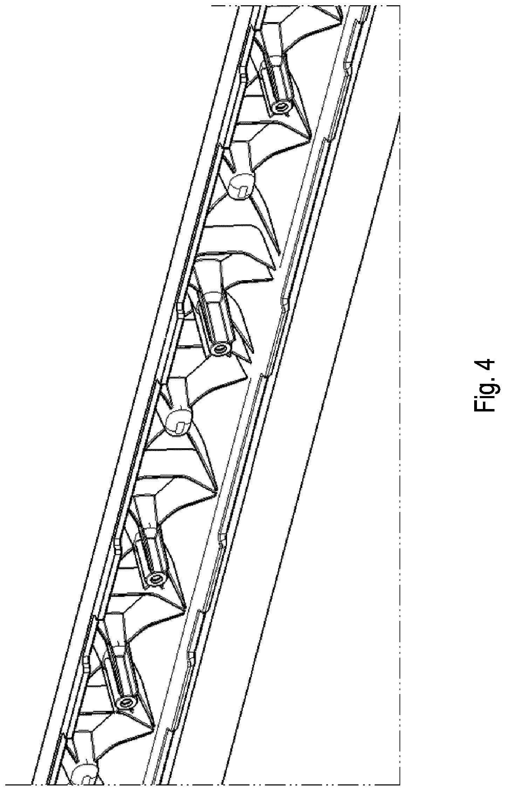

Figur 4 zeigt eine Ansicht ähnlich der Ansicht der Figur 3, lediglich von der Seite betrachtet und ohne Oberteil.

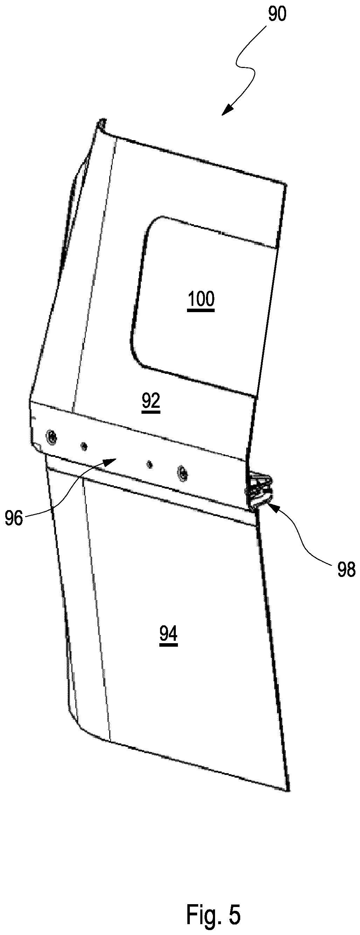

Figur 5 zeigt den linken Abschnitt einer Trennwand, die insgesamt mit der Bezugsziffer 90 bezeichnet ist. Diese Trennwand 90 umfasst eine obere Trennwandhälfte 92 und eine untere Trennwandhälfte 94, die so zueinander angeordnet und miteinander verbunden sind, dass sich ein Überlappungsbereich 96 ausbildet, der als Kanal 98 geformt ist. Dieser Kanal 98 dient der Verstärkung. Es kann zudem vorgesehen sein, dass durch diesen Kanal 98 elektrische Leitungen, bspw. Signalleitungen geführt werden.

Weiterhin zeigt die Darstellung eine Scheibe 100, die in der oberen Trennwandhälfte 92 vorgesehen ist.

## Patentansprüche

1. Trennwand für ein Fahrzeug, die eine obere Trennwandhälfte (12, 52, 92) und eine untere Trennwandhälfte (14, 54, 94) umfasst, die derart zueinander angeordnet sind, dass diese sich in vertikaler Richtung in einem Überlappungsbereich (16, 56, 70, 96) überlappen, so dass in diesem Überlappungsbereich (16, 56, 70, 96) ein Kanal (18, 58, 72, 98) ausgebildet ist, **dadurch gekennzeichnet, dass** in dem Kanal (72) Luftspalte (74) und/oder Luftkanäle (76) vorgesehen sind, um eine Entlüftungsfunktion zu bewerkstelligen.

2. Trennwand nach Anspruch 1, bei der die beiden Trennwandhälften (12, 14, 52, 54, 92, 94) aus einem Kunststoff gefertigt sind.

3. Trennwand nach Anspruch 1 oder 2, bei der im Bereich des Kanals (18, 58, 72, 98) eine Verstärkung vorgesehen ist.

4. Trennwand nach Anspruch 3, bei der die Verstärkung durch ein Endlosfaserband (26) realisiert ist.

5. Trennwand nach einem der Ansprüche 1 bis 4, bei der die beiden Trennwandhälften (12, 14, 52, 54, 92, 94) durch eine Verschraubung zusammengefügt sind.

6. Trennwand nach Anspruch 5, bei der für die Verschraubung Kunststoffeinsätze für Metallschrauben eingebracht sind.

7. Trennwand nach einem der Ansprüche 1 bis 6, bei der in der Trennwand (10, 50, 90) eine Ausnehmung (22) vorgesehen ist.

8. Trennwand nach Anspruch 7, bei der in die Ausnehmung (22) eine Scheibe (24, 100) aus einem transparenten Material eingesetzt ist.

9. Fahrzeug mit einem Fahrzeuginnenraum, wobei in dem Fahrzeuginnenraum eine Trennwand (10, 50, 90) nach einem der Ansprüche 1 bis 8 vorgesehen ist, die dazu eingerichtet ist, den Fahrzeuginnenraum in zwei Räume aufzuteilen.

## Claims

1. A vehicle partition comprising an upper partition half (12, 52, 92) and a lower partition half (14, 54, 94) which are arranged relative to one another in such a way that they overlap in the vertical direction in an overlap region (16, 56, 70, 96), so that a channel (18, 58, 72, 98) is formed in this overlapping region (16, 56, 70, 96), **characterized in that** air gaps (74) and/or air channels (76) are provided in the channel (72) to accomplish a venting function.

2. The partition according to claim 1, wherein the two partition halves (12, 14, 52, 54, 92, 94) are made of a plastic material.

3. The partition according to claim 1 or 2, wherein a reinforcement is provided in the region of the channel (18, 58, 72, 98).

4. The partition according to claim 3, wherein the reinforcement is realized by an endless fiber tape (26).

5. The partition according to one of claims 1 to 4, wherein the two partition halves (12, 14, 52, 54, 92, 94) are joined together by a screw connection.

6. The partition according to claim 5, wherein plastic inserts for metal screws are provided for the screw connection.

7. The partition according to one of claims 1 to 6, wherein a recess (22) is provided in the partition (10, 50, 90).

8. The partition according to claim 7, wherein a disk (24, 100) made of a transparent material is inserted into the recess (22).

9. A vehicle having a vehicle interior, wherein a partition (10, 50, 90) according to one of claims 1 to 8 is provided in the vehicle interior, which partition is arranged to divide the vehicle interior into two spaces.

## Revendications

1. Cloison pour un véhicule, comprenant une demi-cloison supérieure (12, 52, 92) et une demi-cloison inférieure (14, 54, 94), disposées l'une par rapport à l'autre de telle sorte qu'elles se chevauchent dans la direction verticale dans une zone de chevauchement (16, 56, 70, 96), de manière à former un canal (18, 58, 72, 98) dans cette zone de chevauchement (16, 56, 70, 96), ladite cloison étant **caractérisée en ce que** des fentes d'air (74) et/ou des canaux d'air (76) sont mis en place dans le canal (72) pour assurer une fonction de ventilation.

2. Cloison selon la revendication 1, dont les deux demi-cloisons (12, 14, 52, 54, 92, 94) sont fabriquées en une matière plastique.

3. Cloison selon la revendication 1 ou 2, comportant un renforcement dans la zone du canal (18, 58, 72, 98).

4. Cloison selon la revendication 3, le renforcement étant réalisé par un ruban continu de fibres (26).

5. Cloison selon l'une des revendications 1 à 4, dont les deux demi-cloisons (12, 14, 52, 54, 92, 94) sont assemblées par vissage.

6. Cloison selon la revendication 5, comportant des logements en matière plastique pour l'assemblage par vis métalliques.

7. Cloison selon l'une des revendications 1 à 6, un évidement (22) étant prévu dans la cloison (10, 50, 90).

8. Cloison selon la revendication 7, dont l'évidement (22) comporte une vitre (24, 100) en un matériau transparent.

9. Véhicule ayant un habitacle automobile, ce dernier étant pourvu d'une cloison (10, 50, 90) selon l'une des revendications 1 à 8, conçue pour diviser l'habitacle automobile en deux compartiments.
